# EUROPEAN PATENT APPLICATION

(11) **EP 1 533 539 A1**
(43) Date of publication of application: **25.05.2005**
(21) Application number: 03733135.2
(22) Date of filing: 28.05.2003
(51) Int. Cl.: F16F 9/12, F16F 9/14, B60R 7/04

(54) **ROTARY DAMPER AND CONSOLE BOX**

(30) Priority: 17.06.2002 JP 2002176112
(71) Applicant: KABUSHIKI KAISHA SOMIC ISHIKAWA, Sumida-ku, Tokyo 130-0004 (JP)
(72) Inventor: KANNO, Hidenori, c/o K.K. Somic Ishikawa, Tokyo 130-0004 (JP); SHIMURA, Ryota, c/o K.K. Somic Ishikawa, Tokyo 130-0004 (JP); ITAGAKI, Masanori, c/o K.K. Somic Ishikawa, Tokyo 130-0004 (JP)
(74) Representative: TER MEER STEINMEISTER & PARTNER GbR
(86) International application number: PCT/JP2003/006687
(87) International publication number: WO 2003/106860

(57) **Abstract**

An object of the invention is to provide a rotary damper which can individually control two controlled subjects independently rotatable with each other by utilizing both a viscous resistance by a viscous material and a resistance by a viscous fluid and putting properties thereof to good use. A rotary damper (1A) is provided with first and second chambers (4, 5) which are separated by a partition wall (3), a rotor (6) which is rotatably arranged within the first chamber (4), a viscous material (7) which is filled in a slight gap between the rotor (6) and a slidable contact surface slidably contacted with the rotor (6), a viscous fluid (11) which is filled in the second chamber (5), and a vane (12) which is swingably arranged within the second chamber (5) filled with the viscous fluid (11).

## Description

### TECHNICAL FIELD

The present invention relates to a rotary damper and a console box provided with the rotary damper.

### BACKGROUND ART

In conventional, as a rotary damper, there have been known a structure of a type that a damping force is achieved by a viscous resistance of a viscous material filled in a slight gap between a rotor and a slidable contact surface with which the rotor is slidably contacted (hereinafter, refer simply to as "a structure utilizing a viscous resistance"), and a structure of a type that a damping force is achieved by a resistance of a viscous fluid pressed by a vane (hereinafter, refer simply to as "a structure utilizing a resistance of a viscous fluid"). Both the types are generally manufactured as independent products.

Further, since the structure utilizing the viscous resistance and the structure utilizing the resistance of the viscous fluid are different from each other in a damping property, both the structures are appropriately used in correspondence to a controlled subject in general. There is an example that plural sets of any one type structures are combined so as to be used, however, there is no idea of simultaneously using both the types. Accordingly, there has been no rotary damper having both the functions.

As a conventional example using a combination of a plurality of rotary dampers utilizing the resistance of the viscous fluid, for example, Japanese Utility Model No. 2512707 discloses a speed adjusting apparatus for a toilet seat and a toilet lid structured by arranging a rotary damper for the toilet seat and a rotary damper for the toilet lid in parallel or in series. In accordance with the speed adjusting apparatus, since it is possible to attach both the rotary damper for the toilet seat and the rotary damper for the toilet lid which reduce an impact generated at a time of closing the toilet seat and the toilet lid to one side of a toilet in a lump, there can be obtained an advantage that the structure is advantageous in space and layout in comparison with the case that the respective rotary dampers are arranged in both sides of the toilet in a divisional manner.

However, in the conventional system in which the independent rotary dampers are arranged in the respective controlled subjects in order to control a rotary motion of a plurality of controlled subjects which can rotate independently with each other, such as the toilet seat and the toilet lid, since the same number of rotary dampers as the number of the controlled subjects are required, a manufacturing cost is increased. Further, a lot of trouble and time are required for assembling a plurality of rotary dampers. Further, as in the speed adjusting apparatus mentioned above, an entire size of the structure in which a plurality of rotary dampers are arranged in parallel or in series, for example, an entire axial length of the structure in the case that the respective rotary dampers are closely attached to each other so as to be arranged in series is given by simply summing up the axial length of the individual rotary damper. Accordingly, it is hard to intend to downsize by shortening the entire axial length because there is a limit even by making a thickness of a main body case constituting each of the rotary dampers as small as possible.

On the other hand, as a console box equipped in a motor vehicle, there has been known a structure having a double lid constituted by an inner lid capable of receiving an article and an outer lid capable of closing an opening portion of the inner lid. In the double lid mentioned above, since the outer lid is frequently opened and closed in comparison with the inner lid, it is desirable that the outer lid is structured such that the outer lid can be opened by a small force, or can be opened without attaching a hand. Accordingly, in order to respond to the demand mentioned above, it can be considered to add a spring member energizing a rotation of the outer lid in an opening direction, however, in the case that the spring member is simply provided, there is a risk that a defect the outer lid jumps up roundly is generated.

Further, it is desired that both the outer lid and the inner lid are structured such that both the lids generate no great impact at a rotation end in a closing direction, however, since a space for installing a buffering apparatus for buffering the impact is limited, it is actually hard to employ a large-sized buffering apparatus and a buffering apparatus protruding outward by being installed, for the buffering apparatus.

A moment of rotation of the inner lid is of course changed whether the article is put in the inner lid or is not put in the inner lid, and the moment of rotation of the inner lid is changed on the basis of fluctuation in a total weight of the received article. Accordingly, even in the case that the rotary damper is used for controlling the rotational motion of the inner lid in the closing direction, the conventional rotary damper can not self-adjust the damping force achieved in correspondence to the load change, and the achieved damping force is fixed, so that it is impossible to always rotate the inner lid at a fixed speed. In other words, when the moment of rotation of the inner lid is increased, the damping force of the rotary damper becomes relatively smaller, and on the contrary, when the moment of rotation of the inner lid is reduced, the damping force of the rotary damper becomes relatively larger. Accordingly, for example, there is generated a defect that in the case of closing the inner lid in which the article is not received, it is possible to securely inhibit the impact from being generated, however, in the case of closing the inner lid in a state in which the article is received in the inner lid, it is impossible to securely inhibit the impact from being generated.

On the contrary, there has been known a rotary damper which can adjust an achieved damping force by being operated from an outer portion in correspondence to the change of the moment of rotation of the controlled subject. However, since it is necessary to operate the rotary damper mentioned above from the outer portion for adjusting the achieved damping force, the rotary damper of this kind is unsuitable for the controlled subject in which a change amount of the moment of rotation is not fixed and the moment of rotation is frequently changed, such as the inner lid of the console box mentioned above, and in the case that the rotary damper is applied to the controlled subject mentioned above, it is necessary to adjust the damping force of the rotary damper by operating the rotary damper from the outer portion while estimating the change amount of the moment of rotation every time when the moment of rotation is changed in accordance that the article is taken in and out the inner lid, so that it is hard to suitably adjust the damping force and it is troublesome and inconvenient to operate the rotary damper.

### DISCLOSURE OF THE INVENTION

Taking the matters mentioned above into consideration, the present invention is made for the purpose of providing a rotary damper which can individually control two controlled subjects independently rotatable with each other by utilizing both a viscous resistance by a viscous material and a resistance by a viscous fluid and putting properties thereof to good use, and a console box provided with the rotary damper. Further, the present invention is made for the purpose of reducing an assembling man-hour and a manufacturing cost in comparison with the conventional one and intending to downsize, in the rotary damper and the console box provided with the rotary damper mentioned above.

In other words, in order to achieve the object mentioned above, the present invention provides the following rotary damper.
(1) A rotary damper provided with first and second chambers which are separated by a partition wall, a rotor which is rotatably arranged within the first chamber, a viscous material which is filled in a slight gap between the rotor and a slidable contact surface slidably contacted with the rotor, a viscous fluid which is filled in the second chamber, and a vane which is swingably arranged within the second chamber filled with the viscous fluid.
(2) A rotary damper as described in the item (1) mentioned above, wherein the rotary damper is provided with a valve mechanism which generates a resistance of the viscous fluid only in the case that the vane is oscillated in one direction.
(3) A rotary damper as described in the item (1) or (2) mentioned above, wherein a spring member energizing a rotation of the rotor in one direction is provided within the first chamber.
(4) A rotary damper as described in the item (3) mentioned above, wherein the rotary damper is provided with a first rotary shaft which is connected to one of two controlled subjects independently rotatable with each other, and is rotated by a rotation of the controlled subject so as to rotate the rotor, a second rotary shaft which is connected to another of the two controlled subjects, and is rotated by the rotation of the controlled subject so as to oscillate the vane, and the first rotary shaft is provided so as to freely move forward and backward by utilizing an elasticity of the spring member.
(5) A rotary damper as described in the item (4) mentioned above, wherein the first and second rotary shafts are concentrically arranged.
(6) A rotary damper as described in any one of the items (1) to (3) mentioned above, wherein the rotary damper is provided with a first rotary shaft which is connected to one of two controlled subjects independently rotatable with each other, and is rotated by a rotation of the controlled subject so as to rotate the rotor, a second rotary shaft which is connected to another of the two controlled subjects, and is rotated by the rotation of the controlled subject so as to oscillate the vane, and the first rotary shaft is inserted into a hollow portion formed along an axis of the second rotary shaft in a penetrating manner.
(7) A rotary damper as described in any one of the items (3) to (6) mentioned above, wherein a direction in which the spring member energizes the rotation of the rotor is set to an opposite direction to an oscillating direction of the vane generating the resistance of the viscous fluid.
(8) A rotary damper as described in any one of the items (1) to (7) mentioned above, wherein the second chamber is formed along an outer peripheral surface of the partition wall.
(9) A rotary damper as described in any one of the items (2) to (8) mentioned above, wherein the valve mechanism has a fluid passage which allows the viscous fluid to pass through, and a flow rate adjusting valve which automatically adjusts a flow rate of the viscous fluid passing through the fluid passage in correspondence to a load change in accordance with a change of a moment of rotation of the controlled subject.
(10) A rotary damper as described in the item (9) mentioned above, wherein the flow rate adjusting valve is constituted by a leaf spring, and is provided so as not to close the fluid passage in a normal state.
(11) A rotary damper as described in the item (10) mentioned above, wherein the flow rate adjusting valve is deflected such that one surface side forming a pressure receiving surface is protruded.
(12) A rotary damper as described in the item (11) mentioned above, wherein the flow rate adjusting valve is formed such that a width in a middle portion positioned between both end portions is smaller than a width in both the end portions.
   Further, in order to achieve the object mentioned above, the present invention provides a console box having a double lid independently rotatable with each other, wherein the console box is provided with the rotary damper as described in any one of the items (1) to (12) having a rotor which rotates in accordance with a rotation of a shaft forming a rotation center of an outer lid in the double lid, and a vane which oscillates in accordance with a rotation of a shaft forming a rotation center of an inner lid in the double lid.
   In specific, the present invention provides the following console boxes.
(13) A console box having a double lid independently rotatable with each other, wherein the console box is provided with a rotary damper provided with first and second chambers which are separated by a partition wall, a rotor which is arranged within the first chamber and rotates in accordance with a rotation of a shaft forming a rotation center of an outer lid in the double lid, a viscous material which is filled in a slight gap between the rotor and a slidable contact surface slidably contacted with the rotor, a viscous fluid which is filled in the second chamber, and a vane which is swingably arranged within the second chamber filled with the viscous fluid and rotates in accordance with a rotation of a shaft forming a rotation center of an inner lid in the double lid.
(14) A console box as described in the item (13) mentioned above, wherein the rotary damper is provided with a valve mechanism which generates a resistance of the viscous fluid only in the case that the vane is oscillated in one direction.
(15) A console box as described in the item (13) or (14) mentioned above, wherein the rotary damper is provided with a spring member energizing a rotation of the rotor in one direction within the first chamber.
(16) A console box as described in any one of the items (13) to (15) mentioned above, wherein the rotary damper is provided with a first rotary shaft which is connected to the outer lid in the double lid and functions as the shaft forming the rotation center of the outer lid, and a second rotary shaft which is connected to the inner lid in the double lid and functions as the shaft forming the rotation center of the inner lid, and the first rotary shaft is provided so as to freely move forward and backward by utilizing an elasticity of the spring member.
(17) A console box as described in the item (16) mentioned above, wherein the rotary damper is structured such that the first and second rotary shafts are concentrically arranged.
(18) A console box as described in any one of the items (13) to (15) mentioned above, wherein the rotary damper is provided with a first rotary shaft which is connected to the outer lid in the double lid and functions as the shaft forming the rotation center of the outer lid, and a second rotary shaft which is connected to the inner lid in the double lid and functions as the shaft forming the rotation center of the inner lid, and the first rotary shaft is inserted into a hollow portion formed along an axis of the second rotary shaft in a penetrating manner.
(19) A console box as described in any one of the items (15) to (18) mentioned above, wherein the rotary damper is structured such that a direction in which the spring member energizes the rotation of the rotor is set to an opposite direction to an oscillating direction of the vane generating the resistance of the viscous fluid.
(20) A console box as described in any one of the items (13) to (19) mentioned above, wherein the rotary damper is structured such that the second chamber is formed along an outer peripheral surface of the partition wall.
(21) A console box as described in any one of the items (14) to (20) mentioned above, wherein the rotary damper is structured such that the valve mechanism has a fluid passage which allows the viscous fluid to pass through, and a flow rate adjusting valve which automatically adjusts a flow rate of the viscous fluid passing through the fluid passage in correspondence to a load change in accordance with a change of a moment of rotation of the inner lid.
(22) A console box as described in the item (21) mentioned above, wherein the flow rate adjusting valve is constituted by a leaf spring, and is provided so as not to close the fluid passage in a normal state.
(23) A console box as described in the item (22) mentioned above, wherein the flow rate adjusting valve is deflected such that one surface side forming a pressure receiving surface is protruded.
(24) A console box as described in the item (23) mentioned above, wherein the flow rate adjusting valve is formed such that a width in a middle portion positioned between both end portions is smaller than a width in both the end portions.

### BRIEF DESCRIPTION OF THE DRAWINGS

Fig. 1 is a cross sectional view showing an internal structure of a rotary damper in accordance with a first embodiment of the present invention;
Fig. 2A is a cross sectional view along a line A-A in Fig. 1;
Fig. 2B is a cross sectional view along a line B-B in Fig. 1;
Fig. 3 is a view showing a flow rate adjusting valve employed in the embodiment mentioned above, in which Fig. 3A is a front elevational view and Fig. 3B is a right side elevational view;
Fig. 4 is a view for explaining an operation of a valve mechanism employed in the embodiment mentioned above;
Fig. 5 is a cross sectional view showing an internal structure of a rotary damper in accordance with a second embodiment of the present invention;
Fig. 6 is a cross sectional view along a line C-C in Fig. 5;
Fig. 7 is a cross sectional view showing an internal structure of a rotary damper in accordance with a third embodiment of the present invention;
Fig. 8 is a view showing a console box provided with the rotary damper in accordance with the first embodiment mentioned above;
Fig. 9 is a view showing a console box provided with the rotary damper in accordance with the first embodiment mentioned above; and
Fig. 10 is a view showing a console box provided with the rotary damper in accordance with the first embodiment mentioned above.

In these drawings, reference symbols 1A, 1B and 1C denote a rotary damper, reference numeral 2 denotes a main body case, reference numeral 3 denotes a partition wall, reference numeral 4 denotes a first chamber, reference numeral 5 denotes a second chamber, reference numeral 6 denotes a rotor, reference numeral 7 denotes a viscous material, reference numeral 8 denotes an O-ring, reference numeral 9 denotes a first rotary shaft, reference numeral 10 denotes a spring member, reference numeral 11 denotes a viscous fluid, reference numeral 12 denotes a vane, reference numeral 13 denotes a second rotary shaft, reference numeral 14 denotes a partition wall portion, reference numeral 15 denotes a valve mechanism, reference numeral 16 denotes a fluid passage, reference numeral 17 denotes a flow rate adjusting valve, reference numeral 18 denotes a leg portion, reference numeral 20 denotes a console box, reference numeral 21 denotes an outer lid, reference numeral 22 denotes an inner lid, and reference numeral 23 denotes a main body portion of the console box.

### BEST MODE FOR CARRYING OUT THE INVENTION

A description will be in detail given below of embodiments in accordance with the present invention.

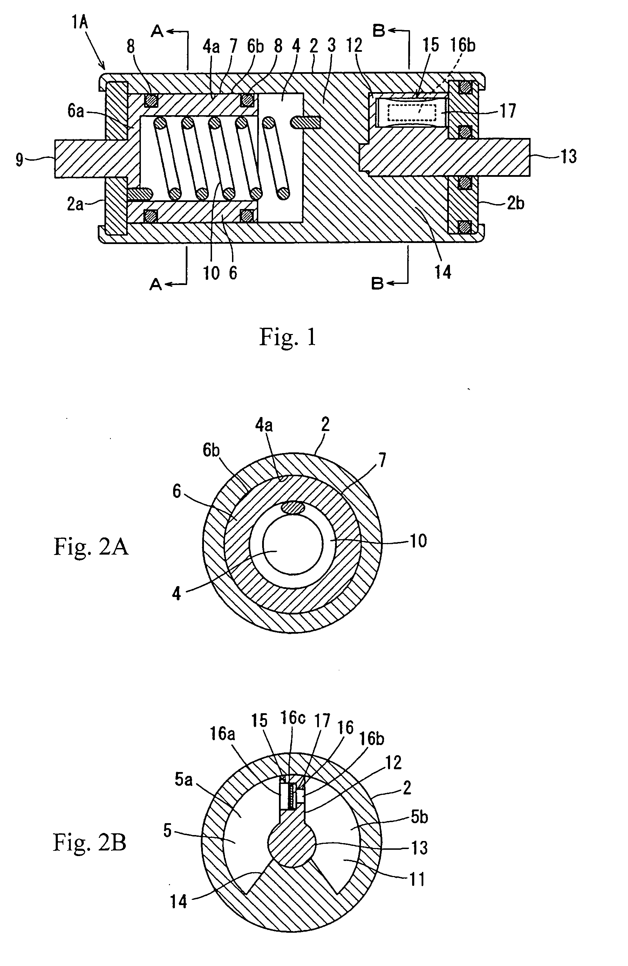

Figs. 1 and 2 are views showing an internal structure of a rotary damper in accordance with a first mode for carrying out the present invention (hereinafter, refer to as "first embodiment"), in which Fig. 1 is a cross sectional view, Fig. 2A is a cross sectional view along a line A-A in Fig. 1, and Fig. 2B is a cross sectional view along a line B-B in Fig. 1. As shown in these drawings, a rotary damper 1A in accordance with the first embodiment has first and second chambers 4 and 5 which are separated by a partition wall 3 provided within a main body case 2. The main body case 2 is structured such that opening portions in both sides in an axial direction are respectively closed by lid members 2a and 2b.

A rotor 6 is rotatably arranged within the first chamber 4. The rotor 6 is formed in an approximately tubular shape in which that one end side is closed by an end wall 6a, and another end side is open. In this case, the shape of the rotor 6 is not limited.

A viscous material 7 is filled in a slight gap between the rotor 6 and a slidable contact surface slidably contacted with the rotor 6. The "slidable contact surface" in this case means a surface with which the rotor is slidably contacted via the viscous material 7 on the basis of a rotation of the rotor 6. In the first embodiment shown in the drawing, the slidable contact surface corresponds to a peripheral wall inner surface 4a of the first chamber 4 which is opposed to an outer peripheral surface 6b of the rotor 6 positioned between O-rings 8 and 8 respectively arranged in both end portions of the rotor 6, and with which the outer peripheral surface 6b is slidably contacted via the viscous material 7.

In this case, the slidable contact surface may employ any surface as far as the surface is provided so as to generate a viscous resistance of the viscous material 7 interposed with respect to the rotor 6 in cooperation with the rotor 6. Accordingly, for example, an inner surface of the lid member 2a opposing to the end wall 6a of the rotor 6 may be formed as the slidable contact surface, or the slidable contact surface may be structured such that a member independently formed from the main body case 2 is arranged within the first chamber 4 and an opposing surface of the member to the rotor 6 is formed as the slidable contact surface.

On the other hand, the viscous material 7 can employ a grease or the like. In this case, the "viscous material" includes a viscous fluid.

In the first embodiment, a first rotary shaft 9 is provided integrally with the rotor 6. The first rotary shaft 9 is connected to one (hereinafter, refer to as a "first controlled subject") in two controlled subjects which can be rotated independently with each other, and is rotated in accordance with a rotation of the first controlled subject, thereby serving to rotate the rotor 6.

In this case, the first rotary shaft 9 may be provided so as to carry out the function mentioned above, and it is not necessary that the first rotary shaft 9 is integrally formed with the rotor 6. Further, the structure may be made such that the rotor 6 is rotated by connecting a shaft forming a rotation center of the first controlled subject which does not constitute the rotary damper 1A to the rotor 6 in place of providing the first rotary shaft 9.

Further, a spring member 10 for energizing the rotation of the rotor 6 in one direction is provided within the first chamber 4. In the first embodiment, the spring member 10 is loaded within a hollow portion of the rotor 6 by utilizing a fact that the rotor 6 is hollow, in view of shortening an axial length of the rotary damper 1A. The spring member 10 can employ any structure as far as the structure can energize the rotation of the rotor 6 in one direction by utilizing an elasticity thereof.

In the first embodiment, a coil spring is used as the spring member 10. Since the spring member 10 is structured such that one end is supported to the end wall 6a of the rotor 6 and another end is supported to the partition wall 3, respectively, the spring member 10 is twisted in accordance with the rotation of the rotor 6 so as to store an energy, and when the rotor 6 is rotated in a reverse direction thereto, the spring member 10 discharges the stored energy so as to energize the rotation of the rotor 6.

Further, in the first embodiment, the rotor 6 has a shorter axial length than an axial length of the first chamber 4 and is arranged so as to be slidable in the axial direction within the first chamber 4, and the spring member 10 also serves to push the rotor 6 in a direction of moving the rotor 6 apart from the partition wall 3.

In other words, when the rotor 6 is slid in a direction in which the rotor 6 is moved close to the partition wall 3, the spring member 10 is going to restore to an original shape at the same time of being compressed. Accordingly, in this case, if an external force applied to the rotor 6 is removed, the spring member 10 serves to push back the rotor 6 on the basis of an elasticity thereof so as to restore to the original position.

On the other hand, the first rotary shaft 9 is provided so as to freely move forward and backward such that a leading end position of the first rotary shaft 9 is moved forward or backward in an axial direction, by utilizing the elasticity of the spring member 10.

A viscous fluid 11 is filled within the second chamber 5. The viscous fluid 11 can employ a silicon oil or the like.

Further, a vane 12 is arranged within the second chamber 5 so as to freely oscillate within the chamber 5. In this case, in the first embodiment, there is employed a so-called single vane system oscillating one vane 12, however, it is possible to employ a so-called double vane system having two vanes and oscillating each of the vanes.

Further, in the first embodiment, a second rotary shaft 13 is provided integrally with the vane 12. The second rotary shaft 13 is connected to another (hereinafter, refer to as a "second controlled subject") in two controlled subjects which can be rotated independently with each other, and is rotated in accordance with a rotation of the second controlled subject, thereby serving to oscillate the vane 12.

In this case, the second rotary shaft 13 may be provided so as to carry out the function mentioned above, and it is not necessary that the second rotary shaft 13 is integrally formed with the vane 12. Further, the structure may be made such that the vane 12 is rotated by connecting a shaft forming a rotation center of the second controlled subject which does not constitute the rotary damper 1A to the vane 12 in place of providing the second rotary shaft 13.

In the first embodiment, the second rotary shaft 13 is concentrically provided with the first rotary shaft 9 mentioned above. It is possible to solve the problem in view of installment in the case that the first and second rotary shafts 9 and 13 are applied to two control subjects having the same rotation center by arranging the first and second rotary shafts 9 and 13 concentrically.

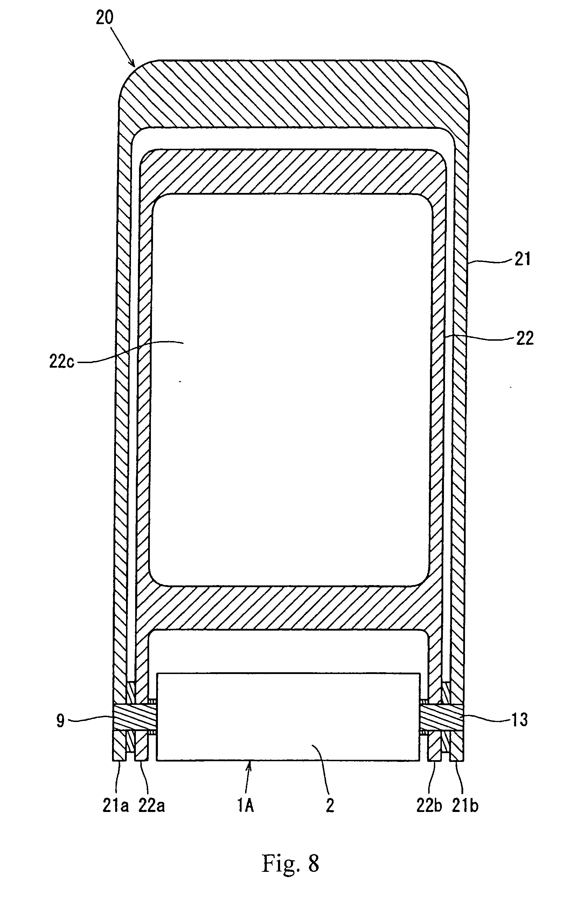

In other words, as in the first embodiment, since the first and second rotary shafts 9 and 13 are concentrically arranged, the rotary damper 1A in which the first and second rotary shafts 9 and 13 respectively protrude from both sides of the main body case 2 can be placed between both base end portions 22a and 22b of a second controlled subject 22 in the first and second controlled subjects 21 and 22 having the same rotation center, for example, as shown in Fig. 8. Accordingly, the rotary damper 1A does not protrude to outer sides of both base end portions 21a and 21b in the first controlled subject 21, and the structure is advantageous in view of layout.

Further, since it is possible to support both the first and second controlled subjects 21 and 22 by the first and second rotary shafts 9 and 13 in the rotary damper 1A, there can be obtained an advantage that support shafts respectively supporting the first and second controlled subjects 21 and 22 are not necessarily provided independently.

In this case, as is different from the structure mentioned above, it is of course possible to employ a structure in which the first and second rotary shafts 9 and 13 are not concentrically arranged, in order to correspond to two controlled subjects having different rotation centers.

The second chamber 5 is separated by a partition wall portion 14 as shown in Fig. 2B. Accordingly, when the vane 12 oscillates within the second chamber 5, the viscous fluid 11 is going to move between both side chambers 5a and 5b with holding the vane 12 therebetween through a slight gap between the vane 12 and the main body case 2, or the like. Further, a resistance of the viscous fluid 11 generated at a time of the movement constitutes a damping force achieved by the rotary damper 1A.

In the first embodiment, there is provided with a valve mechanism 15 for generating a resistance of the viscous fluid 11 only in the case that the vane 12 is oscillated in one direction, such that the damping force can be applied to the second controlled subject only in the case that the second controlled subject connected to the second rotary shaft 13 is rotated in one direction.

The one-way valve mechanism 15 mentioned above can employ a structure provided with a flow path for the viscous fluid 11 provided in the partition wall portion 14 or the vane 12, and a check valve preventing a back flow of the viscous fluid 11 flowing through the flow path so as to flow the viscous fluid only in one direction, both of which are not illustrated.

The valve mechanism 15 utilizing the check valve is effective because the valve mechanism can generate the resistance of the viscous fluid 11 only in the case that the vane 12 is oscillated in one direction, on the assumption that a moment of rotation of the second controlled subject connected to the second rotary shaft 13 is fixed.

As a matter of fact, in the case that the moment of rotation of the second controlled subject is changed, the valve mechanism 15 structured as mentioned above can not increase or reduce the resistance of the viscous fluid 11 in correspondence to the change. Accordingly, it is impossible to always rotate the second controlled subject at an approximately fixed speed.

Accordingly, in the first embodiment, the one-way valve mechanism 15 employs the structure having a fluid passage 16 through which the viscous fluid 11 can pass, and a flow rate adjusting valve 17 which automatically adjusts a flow rate of the viscous fluid 11 passing through the fluid passage 16 in correspondence to a load change in accordance with the change of the moment of rotation of the controlled subject.

The fluid passage 16 may be formed such that the viscous fluid 11 can move between both side chambers 5a and 5b with holding the vane 12 therebetween through the fluid passage 16, and may be provided in the partition wall portion 14.

The fluid passage 16 in the first embodiment is provided so as to extend through the vane 12 in a thickness direction. The fluid passage 16 has a large hole portion 16a which is open to one chamber (hereinafter, refer to as a "pressure chamber") 5a in the chambers 5a and 5b in both sides with respect to the vane 12, and a small hole portion 16b which is open to another chamber (hereinafter, refer to as a "non-pressure chamber") 5b in the chambers 5a and 5b in both sides with respect to the vane 12 and is constituted by a smaller hole than the large hole portion 16a. A groove 16c in which a flow rate adjusting valve 17 is received is provided on the boundary between the large hole portion 16a and the small hole portion 16b.

The flow rate adjusting valve 17 may employ any structure as far as the flow rate adjusting valve can automatically adjust a flow rate of the viscous fluid 11 passing through the fluid passage 16 in correspondence to the change of the load applied to the rotary damper 1A in accordance with the change of the moment of rotation of the second controlled subject. The matter "automatically adjust" in this case means self-adjusting the flow rate of the viscous fluid 11 without being operated from the outer portion.

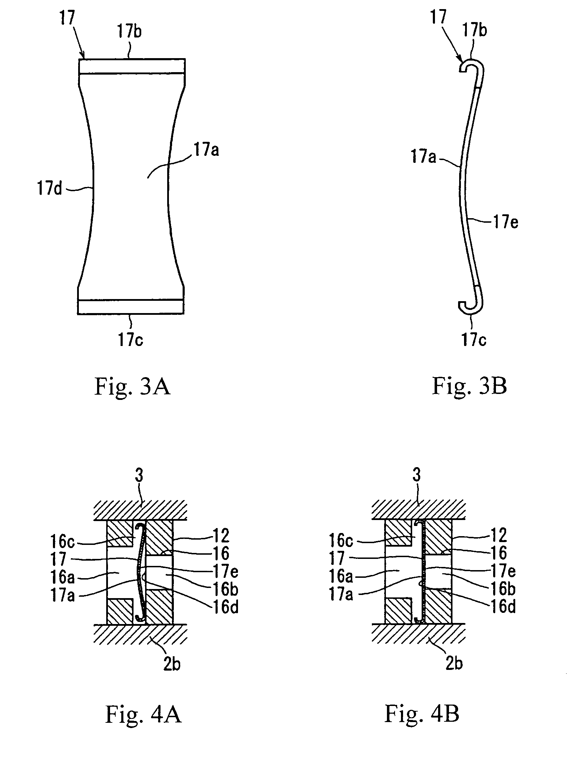

The flow rate adjusting valve 17 in the first embodiment is constituted by a leaf spring, and is deflected, as shown in Fig. 3, such that one surface 17a side forming the pressure receiving surface protrudes, and a width of a middle portion positioned between both end portions 17b and 17c is formed to be smaller than a width of both the end portions 17b and 17c.

In this case, the flow rate adjusting valve 17 preferably employs a structure in which a damage preventing treatment such as a process of applying both the end portions 17b and 17c in an approximately U shape in a side view to both the end portions 17b and 17c, is applied to both the end portions 17b and 17c such as to prevent the lid member 2b and the partition wall 3 from being damaged by both the end portions 17b and 17c.

The flow rate adjusting valve 17 is provided in an inner portion of a groove 16c positioned on the border between the large hole portion 16a and the small hole portion 16b constituting the fluid passage 16, in such a manner as not to close the fluid passage 16 under a normal state (a state in which no load is applied), that is, in such a manner that the viscous fluid 11 can move between the pressure chamber 5a and the non-pressure chamber 5b through the fluid passage 16.

It is possible to appropriately set a direction in which the spring member 10 energizes the rotation of the rotor 6 (hereinafter, refer to "an energizing direction of the spring member 10 "), and an oscillating direction of the vane 12 generating the viscous fluid 11 in the case of employing the one-way valve mechanism 15 (hereinafter, refer to "an oscillating direction of the vane 12") in correspondence to an intended use of the rotary damper 1A, that is, in accordance with the way how each of the rotational motions of the first and second controlled subjects is controlled by the rotary damper 1A, however, in the first embodiment, the energizing direction of the spring member 10 and the oscillating direction of the vane 12 are set to the opposite directions to each other.

The rotary damper 1A structured in the manner mentioned above is used as a control apparatus for controlling each of the rotational motions with respect to two controlled subjects which can independently rotate with each other. For example, as shown in Figs. 8 to 10, in the case that the rotary damper 1A is applied to a double lid which can independently rotate with each other in a console box 20 equipped in a motor vehicle, it is possible to control each of the rotational motions of the outer lid 21 and the inner lid 22 constituting the double lid, by the rotary damper 1A.

Figs. 8 to 10 are views showing the console box 20 provided with the rotary damper 1A. The rotary damper 1A is installed such that a leg portion 18 protruded from the main body case 2 is mounted to a main body portion 23 of the console box 20, whereby the main body case 2 is fixed in a state of being positioned between both the base end portions 22a and 22b of the inner lid 22, the first rotary shaft 9 is connected to the base end portion 21a of the outer lid 21 so as to rotate in accordance with the rotational motion of the outer lid 21, and the second rotary shaft 13 is connected to the base end portion 22b of the inner lid 22 so as to rotate in accordance with the rotational motion of the inner lid 22.

In this case, the base end portion 21b of the outer lid 21 is rotatably supported to the second rotary shaft 13, and the base end portion 22a of the inner lid 22 is rotatably supported to the first rotary shaft 9. In the case that only the outer lid 21 is operated so as to open and close independently, only the first rotary shaft 9 is rotated in accordance with the motion, and the second rotary shaft 13 is not rotated. On the other hand, in the case that only the inner lid 22 is operated so as to open and close independently, only the second rotary shaft 13 is rotated in accordance with the motion, and the first rotary shaft 9 is not rotated.

Since the first rotary shaft 9 is provided so as to freely move forward and backward, that the first and second rotary shafts 9 and 13 are connected to the outer lid 21 and the inner lid 22 respectively, by first connecting the second rotary shaft 13 to the base end portion 22b of the inner lid 22 in a state in which the first rotary shaft 9 is moved backward so as not to protrude from the main body case 2, and thereafter moving the first rotary shaft 9 forward so as to protrude from the main body case 2, thereby connecting to the base end portion 21a of the outer lid 21. Accordingly, since it is not necessary to deflect both the base end portions 21a and 21b of the outer lid 21 and the base end portions 22a and 22b of the inner lid 22 respectively to an outer side, at a time of connecting the first and second rotary shafts 9 and 13, it is very easy to place the rotary damper 1A.

Further, since the rotary damper 1A is constituted by a single individual piece, and is not constituted by a plurality of independent rotary dampers, the rotary damper 1A can be mounted for a short time. Accordingly, it is possible to widely reduce an assembling man-hour in comparison with the case of mounting both of the rotary damper utilizing the viscous resistance of the viscous material and the rotary damper utilizing the resistance of the viscous fluid which are respectively structured independently.

Further, in accordance with the rotary damper 1A, it is possible to further widely reduce the assembling man-hour, as a synergetic effect on the basis of the matter that the rotary damper is constituted by the single individual piece, and the matter that the first rotary shaft 9 is provided so as to freely move forward and backward.

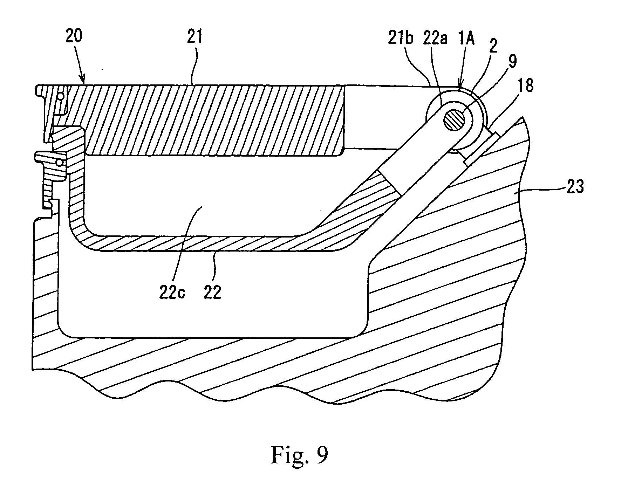

The double lid of the console box 20 is provided such that the outer lid 21 constituting the double lid can close the opening portion of the inner lid 22, and the inner lid 22 is structured such as to have the receiving portion (the receiving space) 22c for receiving the article, and is provided such as to freely close the opening portion of the main body portion 23 in the console box 20 (refer to Fig. 9). Further, the outer lid 21 maintains a completely closed state (a fully closed state) by being engaged with the inner lid 22, and the inner lid 22 maintains a fully closed state by being engaged with the main body portion 23 of the console box 20.

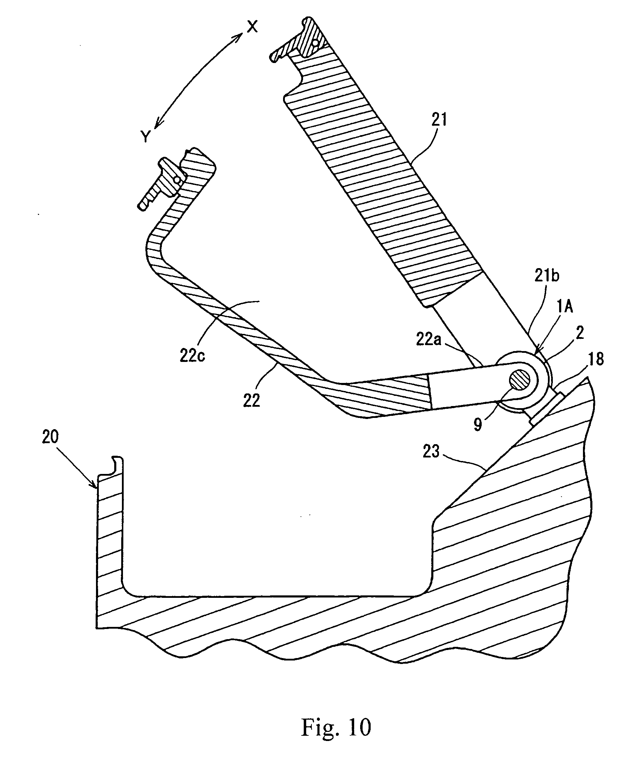

The spring member 10 of the rotary damper 1A is provided so as to energize the rotation of the rotor 6 in one direction. In other words, in this case, the spring member 10 is provided so as to energize the rotational motion of the outer lid 21 in an opening direction (a direction of an arrow X in Fig. 10). Accordingly, when canceling the engagement state between the outer lid 21 and the inner lid 22 in the case of opening the outer lid 21, the rotor 6 is rotated in one direction on the basis of the operation of the spring member 10, and the outer lid 21 connected to the rotor 6 is going to jump up in an opening direction via the first rotary shaft 9 accompanying therewith. On the other hand, the outer peripheral surface 6b of the rotor 6 and the peripheral wall inner surface 4a of the first chamber 4 which are opposed to each other are shifted on the basis of the rotation of the rotor 6 in one direction, whereby the viscous resistance is generated in the viscous material 7 interposed between both the elements. As a result, the rotational speed of the rotor 6 in one direction is reduced by the viscous resistance of the viscous material 7, and the rotational motion of the outer lid 21 in the opening direction becomes slow accordingly.

Therefore, in accordance with the rotary damper 1A, the outer lid 21 can be opened by a small force or can be opened without attaching a hand thereto, on the basis of an effect of the spring member 10 which makes the outer lid 21 to rotate in the opening direction, and the viscous resistance of the viscous material 7 which makes the rotational motion of the outer lid 21 slow against the energizing force of the spring member 10, without making the outer lid 21 not to jump up roundly.

Further, since the rotary damper 1A is structured such as to have the spring member 10 operating as mentioned above built-in, it is not necessary to independently arrange the spring member for opening the outer lid 21 by a small force. Accordingly, a space for independently arranging the spring member is not required, and it is possible to zero clear the man-hour, time and cost for assembling the spring member.

When closing the outer lid 21, the outer lid 21 is rotated in a closing direction (a direction of an arrow Y in Fig. 10) by applying an external force to the outer lid 21. In accordance with this, in the rotary damper 1A, the first rotary shaft 9 and the rotor 6 are rotated in a reverse direction to the direction mentioned above. When the rotor 6 is rotated in the reverse direction as mentioned above, a force of the spring member 10 restoring to the original shape is generated as well as the spring member 10 is twisted. Further, the rotor 6 is rotated in the reverse direction, whereby the outer peripheral surface 6b of the rotor 6 and the peripheral wall inner surface 4a of first chamber 4 which are opposed to each other are shifted, whereby the viscous resistance is generated in the viscous material 7 interposing between both the elements. As a result, the rotational speed of the rotor 6 in the reverse direction is reduced by the force of the spring member 10 going to restore to the original shape and the viscous resistance of the viscous material 7, and the rotational motion of the outer lid 21 in the closing direction becomes slow accordingly.

As mentioned above, in accordance with the rotary damper 1A, since it is possible to close the outer lid 21 at the slow speed by utilizing the elasticity of the spring member 10 and the viscous resistance of the viscous material 7, it is possible to prevent a great impact from being generated at a time when the outer lid 21 reaches the fully closed state.

On the other hand, in the case of opening the inner lid 22, the engagement state between the console box 20 and the main body portion 23 is first cancelled. At this time, in the case of opening the inner lid 22 in a state in which the outer lid 21 is engaged with the inner lid 22, the weight of the outer lid 21 is applied as a load, however, since the effect of the spring member 10 of the rotary damper 1A mentioned above is applied to the outer lid 21, a load of a person opening the inner lid 22 can be reduced.

Further, when rotating the inner lid 22 in an opening direction (a direction of an arrow X in Fig. 10), in the rotary damper 1A, the second rotary shaft 13 is rotated and the vane 12 is oscillated in accordance therewith. In this case, since the rotary damper 1A has a one-way valve mechanism 15, and the direction in which the spring member 10 energizes the rotation of the rotor 6, and the oscillating direction of the vane 12 generating the resistance of the viscous fluid 11 are set to the opposite directions to each other, it is possible to make the resistance of the viscous fluid 11 to be hardly generated on the basis of the function of the valve mechanism 15 even in the case that the vane 12 is oscillated in accordance with the rotational motion of the inner lid 22 in the opening direction.

In other words, in this case, the vane 12 oscillates in a clockwise direction in Fig. 2B. The viscous fluid 11 pressed by the vane 12 is going to move to the pressure chamber 5a from the non-pressure chamber 5b through the fluid passage 16 constituting the valve mechanism 15. At this time, the viscous fluid 11 flows into the fluid passage 16 from the small hole portion 16b of the fluid passage 16, however, the flow rate adjusting valve 17 constituting the valve mechanism 15 is deflected, as shown in Fig. 3, such that one side 17a forming the pressure receiving surface protrudes, a width of a middle portion 17d positioned between both the end portions 17b and 17c is smaller than the widths of both the end portions 17b and 17c, and as shown in Fig. 4A, one surface 17a side is directed to the large hole portion 16a side of the fluid passage 16 so as not to close the fluid passage 16. Accordingly, the viscous fluid 11 flowing into the small hole portion 16b can flow into the large hole portion 16a through a gap between another surface 17e of the flow rate adjusting valve 17 and the wall surface 16d in the side of the small hole portion 16b of the groove 16c receiving the flow rate adjusting valve 17, and a gap formed within the groove 16c on the basis of the fact that the middle portion 17d of the flow rate adjusting valve 17 is pinched. Since the viscous fluid 11 can pass through the fluid passage 16 with being hardly restricted in a flow rate by the flow rate adjusting valve 17 as mentioned above, the resistance is hardly generated at a time of moving from the non-pressure chamber 5b to the pressure chamber 5a. Accordingly, a micro damping force achieved by the rotary damper 1A at this time does not affect to the rotational motion of the inner lid 22, and the damping force does not apply a load to the person opening the inner lid 22.

In the case of closing the inner lid 22, the inner lid 22 can receive the article, and the inner lid 22 can be closed together with the outer lid 21 in a state in which the outer lid 21 is engaged with the inner lid 22. Accordingly, it is impossible that the moment of rotation at a time of rotating in the closing direction (the direction of the arrow Y in Fig. 10) is always fixed.

In other words, the weight of the inner lid 22 is largely changed between a state in which the sufficient amount of articles are received in the receiving portion 22c and a state in which no article is received. Further, in the case of closing together with the outer lid 21, the weight of the outer lid 21 is applied to the weight of the inner lid 22. Accordingly, the moment of rotation at a time of rotating in the closing direction is largely changed between the case that only the inner lid 22 is closed in a state in which no article is received in the inner lid 22, and the case that the inner lid 22 is closed together with the outer lid 21 in a state in which the sufficient amount of articles are received in the inner lid 22.

The rotary damper 1A can control the rotational motion of the inner lid 22 in the closing direction as follows. In other words, the second rotary shaft 13 is rotated in accordance with the rotational motion of the inner lid 22 in the closing direction, whereby the vane 12 is oscillated in a counterclockwise direction in Fig. 2B, so that the rotary damper 1A presses the viscous fluid 11 in the pressure chamber 5a. Accordingly, the viscous fluid 11 in the pressure chamber 5a flows into the large hole portion 16a of the fluid passage 16. The flow rate adjusting valve 17 is deformed so as to narrow the gap between the another surface 17e and the wall surface 16d in the side of the small hole portion 16b of the groove 16c receiving the flow rate adjusting valve 17, by receiving the pressure of the viscous fluid 11 flowing into the large hole portion 16a, thereby intending to prevent the viscous fluid 11 from flowing into the small hole portion 16b.

However, the flow rate adjusting valve 17 is constituted by the leaf spring, and is deflected such that one surface 17a forming the pressure receiving surface in this case protrudes. Accordingly, when the load applied to the rotary damper 1A is small, for example, when closing only the inner lid 22 in a state in which no article is received in the inner lid 22, the force by which the vane 12 presses the viscous fluid 11 in the pressure chamber 5a is small, and the pressure of the viscous fluid 11 received by the one surface 17a is small, so that a degree of deformation is small. Accordingly, in this case, the flow rate of the viscous fluid 11 flowing into the small hole portion 16b is only limited in some degree, and the resistance of the viscous fluid 11 generated at this time is small. As a result, the damping force generated by the rotary damper 1A becomes small.

On the other hand, when the load applied to the rotary damper 1A is great, for example, when the inner lid 22 is closed together with the outer lid 21 in a state in which the sufficient amount of articles are received in the inner lid 22, the force by which the vane 12 presses the viscous fluid 11 in the pressure chamber 5a is high and the pressure of the viscous fluid 11 received by the one surface 17a is high, so that the flow rate adjusting valve 17 has a large degree of deformation. Accordingly, in this case, the flow rate of the viscous fluid 11 flowing into the small hole portion 16b is widely restricted, and the resistance of the viscous fluid 11 generated at this time is large. As a result, the damping force achieved by the rotary damper 1A is increased.

As mentioned above, in accordance with the valve mechanism 15, since it is possible to make it harder to flow the viscous fluid 11 into the small hole portion 16b by gradually narrowing the gap between the another surface 17e of the flow rate adjusting valve 17 and the wall surface 16d of the groove 16c in accordance with an increase of the load applied to the rotary damper 1A, without being operated from the external portion, it is possible to self-control the flow rate of the viscous fluid 11 passing through the fluid passage 16 so as to gradually reduce the flow rate.

Therefore, in accordance with the rotary damper 1A, since a suitable magnitude of damping force can be achieved in correspondence to the dimension of the moment of rotation of the inner lid 22 of the time without applying any operation to the rotary damper 1A, it is possible to always rotate the inner lid 22 at an approximately fixed slow speed. Accordingly, even when the moment of rotation of the inner lid 22 is changed, it is possible to securely restrict the impact generated at the rotation end of the inner lid 22 in the closing direction.

Further, in the case of an overload, the flow rate adjusting valve 17 is exposed to the great pressure of the viscous fluid 11 flowing into the large hole portion 16a, whereby the another surface 17e is largely deformed so as to be closely attached to the wall surface 16d of the groove 16c, thereby completely inhibiting the viscous fluid 11 from flowing into the small hole portion 16b. Accordingly, since the viscous fluid 11 can not move to the non-pressure chamber 5b from the pressure chamber 5a, the vane 12 can not be oscillated so as to become in a lock state. Therefore, in accordance with the rotary damper 1A, it is possible to prevent a rapid closing motion of the inner lid 22 due to the overload.

In the case of being locked as mentioned above, it is necessary to set the gap between the vane 12 and the peripheral wall of the second chamber 5 slidably contacted with the vane 12 to be extremely small such that the viscous fluid 11 does not move through the gap. On the other hand, it is of course possible to structure such that the viscous fluid 11 is moved through the slight gap between the vane 12 and the peripheral wall of the second chamber 5 slidably contacted with the vane 12 without being locked, and the great damping force can be achieved.

Next, a description will be given of a rotary damper in accordance with a second mode for carrying out the invention (hereinafter, refer to as "a second embodiment").

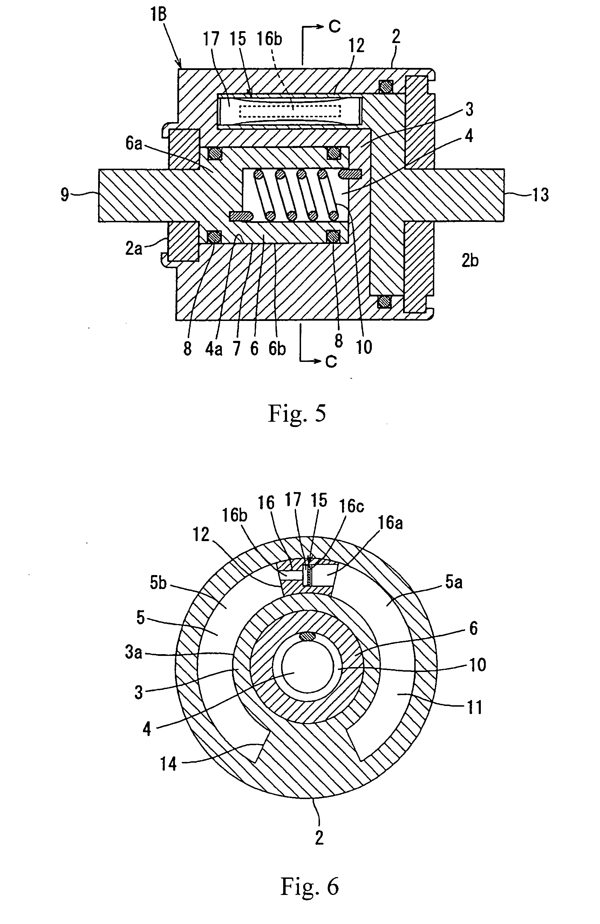

Figs. 5 and 6 are views showing an internal structure of a rotary damper 1B in accordance with the second embodiment, in which Fig. 5 is a cross sectional view, and Fig. 6 is a cross sectional view along a line C-C in Fig. 5. As shown in these drawings, the rotary damper 1B in accordance with the second embodiment is structured such as to have the same constituting members or constituting elements as those of the rotary damper 1A in accordance with the first embodiment mentioned above, however, is different from the rotary damper 1A in accordance with the first embodiment in a point that the second chamber 5 is formed along an outer peripheral surface 3a of the partition wall 3 separating the second chamber 5 and the first chamber 4.

The rotary damper 1A in accordance with the first embodiment is structured as the single individual piece while having the buffering function utilizing the viscous resistance of the viscous material 7 and the buffering function utilizing the resistance of the viscous fluid 11 at once, whereby it is possible to shorten the entire axial length as much as possible without lowering the buffering functions. However, in the rotary damper 1B in accordance with the second embodiment, the second chamber 5 is formed along the outer peripheral surface 3a of the partition wall 3, whereby it is possible to further widely shorten the entire axial length. Further, in accordance with the rotary damper 1B mentioned above, in the same manner as that of the rotary damper 1A mentioned above, it is possible to individually control two controlled subjects independently rotatable with each other by utilizing both of the viscous resistance obtained by the viscous material 7 and the resistance obtained by the viscous fluid 11 and putting the respective properties to good use.

Next, a description will be given of a rotary damper in accordance with a third mode for carrying out the invention (hereinafter, refer to as "a third embodiment").

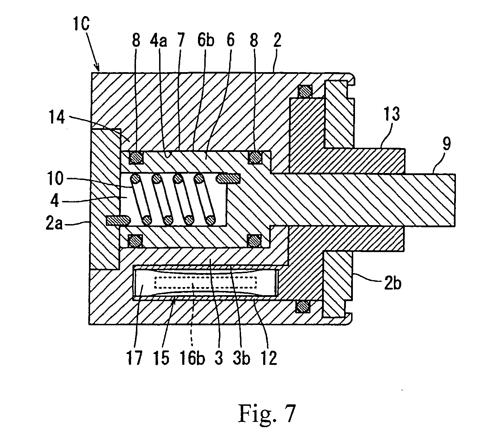

Fig. 7 is a cross sectional view showing an internal structure of a rotary damper 1C in accordance with the third embodiment. As shown in this drawing, the rotary damper 1C in accordance with the third embodiment is structured such as to have the same constituting members or constituting elements as those of the rotary damper 1B in accordance with the second embodiment mentioned above, however, is different from the rotary damper 1B in accordance with the second embodiment in a point that the first rotary shaft 9 is inserted into a hollow portion which is formed along an axis of the second rotary shaft 13 in a penetrating manner.

In the rotary dampers 1A and 1B in accordance with the first and second embodiments, the first and second rotary shafts 9 and 13 are structured such as to be respectively arranged in both sides in an axial direction of the main body case 2. On the contrary, in the rotary damper 1C in accordance with the third embodiment, the structure is made such that the first and second rotary shafts 9 and 13 are respectively arranged in one side in the axial direction of the main body case 2, by making the second rotary shaft 13 hollow, and inserting the first rotary shaft 9 into the hollow portion. Accordingly, in accordance with the rotary damper 1C, it is possible to use by placing only in one side of each of two controlled subjects which can be independently rotated with each other.

In this case, the structure may be made such that the respective shafts forming the centers of rotation of two controlled subjects which do not constitute the rotary damper 1C are connected to the rotor 6 and the vane 12 respectively, in one side in the axial direction of the main body case 2, in place of the first and second rotary shafts 9 and 13.

Further, in the rotary damper 1C, since the second chamber 5 is formed along the outer peripheral surface 3a of the partition wall 3 in the same manner as the rotary damper 1B in accordance with the second embodiment, it is possible to widely shorten the entire axial length.

Further, in accordance with the rotary damper 1C mentioned above, in the same manner as those of the rotary dampers 1A and 1B in accordance with the first and second embodiments mentioned above, it is possible to individually control two controlled subjects independently rotatable with each other by utilizing both of the viscous resistance obtained by the viscous material 7 and the resistance obtained by the viscous fluid 11 and putting the respective properties to good use.

Further, in the case of employing a structure having the fluid passage 16 mentioned above and the flow rate adjusting valve 17 for the valve mechanism 15, in the rotary dampers 1B and 1C in accordance with the second and third embodiments, it is possible to achieve a suitable damping force in correspondence to the magnitude of the moment of rotation of the time without requiring any operation even when the moment of rotation of the controlled subject is changed, whereby it is possible to rotate the controlled subject at an approximately fixed speed.

Further, since each of the rotary dampers 1A, 1B and 1C in accordance with the first to third embodiments is structured as the single individual piece, it is possible to reduce the assembling man-hour and the manufacturing cost in comparison with the conventional one, and it is possible to intend to downsize.

### INDUSTRIAL APPLICABILITY

As described above, in accordance with the present invention, it is possible to provide the rotary damper which can individually control two controlled subjects independently rotatable with each other by utilizing both the viscous resistance by the viscous material and the resistance by the viscous fluid and putting properties thereof to good use, and the console box provided with the rotary damper.

Further, it is possible to reduce the assembling man-hour and the manufacturing cost in comparison with the conventional one and intend to downsize, in the rotary damper and the console box provided with the rotary damper mentioned above.

Further, it is possible to achieve the suitable damping force in correspondence to the magnitude of the moment of rotation of the time without requiring any operation even when the moment of rotation of the controlled subject is changed, whereby it is possible to rotate the controlled subject at an approximately fixed speed.

## Claims

1. A rotary damper comprising:
first and second chambers which are separated by a partition wall;
a rotor which is rotatably arranged within said first chamber;
a viscous material which is filled in a slight gap between said rotor and a slidable contact surface slidably contacted with said rotor;
a viscous fluid which is filled in said second chamber; and
a vane which is swingably arranged within the second chamber filled with said viscous fluid.

2. A rotary damper as claimed in claim 1, wherein said rotary damper is provided with a valve mechanism which generates a resistance of said viscous fluid only in the case that said vane is oscillated in one direction.

3. A rotary damper as claimed in claim 1 or 2, wherein a spring member energizing a rotation of said rotor in one direction is provided within said first chamber.

4. A rotary damper as claimed in claim 3, wherein the rotary damper is provided with a first rotary shaft which is connected to one of two controlled subjects independently rotatable with each other, and is rotated by a rotation of said controlled subject so as to rotate said rotor, a second rotary shaft which is connected to another of said two controlled subjects, and is rotated by the rotation of said controlled subject so as to oscillate said vane, and said first rotary shaft is provided so as to freely move forward and backward by utilizing an elasticity of said spring member.

5. A rotary damper as claimed in claim 4, wherein said first and second rotary shafts are concentrically arranged.

6. A rotary damper as claimed in any one of claims 1 to 3, wherein the rotary damper is provided with a first rotary shaft which is connected to one of two controlled subjects independently rotatable with each other, and is rotated by a rotation of said controlled subject so as to rotate said rotor, a second rotary shaft which is connected to another of said two controlled subjects, and is rotated by the rotation of said controlled subject so as to oscillate said vane, and said first rotary shaft is inserted into a hollow portion formed along an axis of said second rotary shaft in a penetrating manner.

7. A rotary damper as claimed in any one of claims 3 to 6, wherein a direction in which said spring member energizes the rotation of said rotor is set to an opposite direction to an oscillating direction of said vane generating the resistance of said viscous fluid.

8. A rotary damper as claimed in any one of claims 1 to 7, wherein said second chamber is formed along an outer peripheral surface of said partition wall.

9. A rotary damper as claimed in any one of claims 2 to 8, wherein said valve mechanism has a fluid passage which allows said viscous fluid to pass through, and a flow rate adjusting valve which automatically adjusts a flow rate of the viscous fluid passing through said fluid passage in correspondence to a load change in accordance with a change of a moment of rotation of the controlled subject.

10. A rotary damper as claimed in claim 9, wherein said flow rate adjusting valve is constituted by a leaf spring, and is provided so as not to close said fluid passage in a normal state.

11. A rotary damper as claimed in claim 10, wherein said flow rate adjusting valve is deflected such that one surface side forming a pressure receiving surface is protruded.

12. A rotary damper as claimed in claim 11, wherein said flow rate adjusting valve is formed such that a width in a middle portion positioned between both end portions is smaller than a width in both the end portions.

13. A console box having a double lid independently rotatable with each other, wherein the console box is provided with the rotary damper as claimed in any one of claims 1 to 12 having a rotor which rotates in accordance with a rotation of a shaft forming a rotation center of an outer lid in said double lid, and a vane which oscillates in accordance with a rotation of a shaft forming a rotation center of an inner lid in said double lid.
